# FASCICULE DE BREVET EUROPEEN

(11) **EP 2 608 505 B1**
(45) Date de publication et mention de la délivrance du brevet: **26.08.2015**
(21) Numéro de dépôt: 12197432.3
(22) Date de dépôt: 17.12.2012
(51) Int. Cl.: H04M 3/487, H04M 7/00, G06Q 30/02

(54) **Procédé de rappel automatique d'un utilisateur sélectionnant une publicité en ligne et système de communication associé**
Automatisches Rückrufverfahren eines Teilnehmers durch Auswahl einer Online-Werbung, und entsprechendes Kommunikationssystem
Method for automatically calling back a user selecting an online advertisement and associated communication system

(30) Priorité: 21.12.2011 FR 1162165
(43) Date de publication de la demande: 26.06.2013
(73) Titulaire: Société Française du Radiotéléphone-SFR, 75008 Paris (FR)
(72) Inventeur: Hamel, Alain, 92200 Neuilly-sur-Seine (FR); Bilic, Guillaume, 92160 Antony (FR); Guindolet, Stéphane, 75012 Paris (FR)
(74) Mandataire: Deschamps, Samuel

(56) Documents cités:
- EP-A1- 1 229 686
- US-A1- 2009 016 507

## Description

### DOMAINE TECHNIQUE DE L'INVENTION

L'invention concerne un procédé de rappel automatique d'un utilisateur sélectionnant une publicité en ligne, ainsi que le système de communication associé.

L'invention trouve une application particulièrement avantageuse dans le domaine des solutions dites de "call back" consistant à rappeler un utilisateur intéressé par un produit objet d'une publicité diffusée sur des réseaux de télécommunications, en particulier les réseaux mobiles.

### ETAT DE LA TECHNIQUE

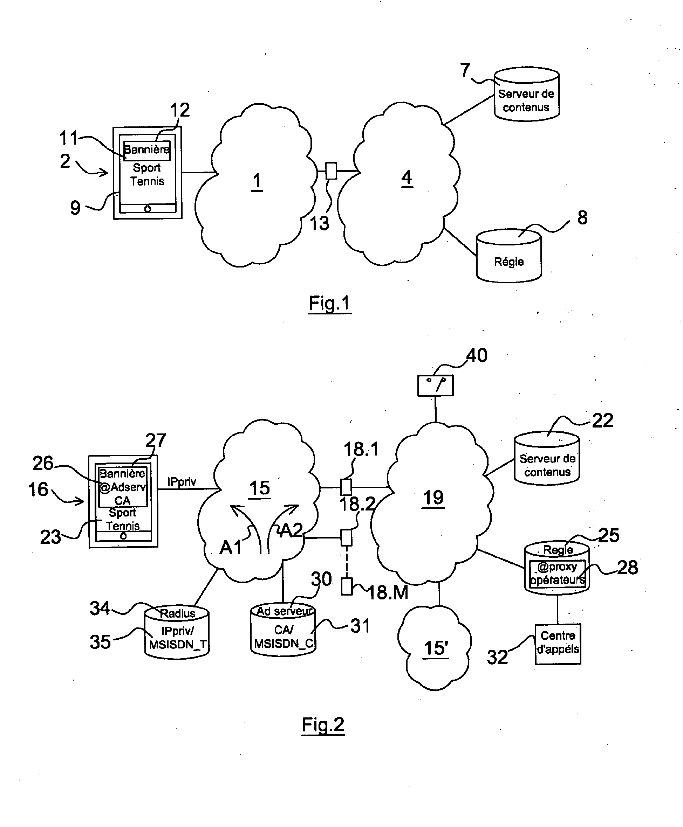

La Figure 1 montre un réseau 1 d'un opérateur avec lequel un terminal 2 d'un utilisateur est en relation pour accéder à un réseau tiers 4, en l'occurrence le réseau Internet. Typiquement, le réseau 1 de l'opérateur est un réseau de téléphonie mobile de type GSM ou UMTS ou tout autre technologie (LTE, Wimax...); tandis que le terminal 2 est un terminal de type SMARTPHONE. Alternativement, le réseau 1 est un réseau de téléphonie fixe; tandis que le terminal 2 est un ordinateur accédant à Internet via un modem appelé couramment "box" mettant en oeuvre le protocole ADSL.

Suite à une requête de l'utilisateur, un serveur 7 de contenu est susceptible d'afficher une page WEB 9 sur l'écran du terminal 2. Par ailleurs, un serveur 8 de régie publicitaire connecté au réseau 4 est susceptible d'afficher une bannière publicitaire 11 d'un annonceur sur la page 9 visualisée par l'utilisateur. A cet effet, l'entreprise média qui gère le contenu média délivré par le serveur 7 met à disposition une zone 12 pour obtenir une rémunération à partir de la publicité affichée dans cette zone 12. Le serveur de contenu 7 appartient par exemple à une entreprise média diffusant des informations d'actualité ou sportives.

Depuis Internet, et dans le cas d'utilisateurs accédant à internet depuis un réseau privé située derrière un proxy (comme c'est majoritairement le cas des réseaux 3G mobiles), le serveur de régie 8 ne peut avoir accès qu'à une adresse publique d'un proxy 13 de l'opérateur commun à plusieurs terminaux. La régie publicitaire ne peut donc pas avoir accès à des informations relatives à l'utilisateur du terminal 2 en train de visualiser la page 9 contenant la bannière 11. En conséquence, pour mettre en oeuvre des solutions de "call back", on demande généralement à l'utilisateur de saisir son numéro de téléphone dans une interface graphique apparaissant après la sélection de la bannière 11. Par la suite, les données saisies sont utilisées pour rappeler l'utilisateur et le mettre en communication avec un standard téléphonique. L'inconvénient de cette technique est que le nombre d'utilisateurs n'allant pas jusqu'au bout de la procédure de saisie du numéro de téléphone est important. Cela est dû à l'absence de connaissance du numéro de l'utilisateur, au souhait de ne pas poursuivre la démarche publicitaire ou encore à la crainte d'être importuné par l'annonceur. En conséquence, le taux de transformation correspondant au rapport entre nombre d'utilisateurs ayant sollicité le rappel et le nombre d'utilisateurs ayant visualisé la bannière publicitaire est relativement faible.

Le document WO2006/004860 divulgue une technique d'affichage d'une bannière publicitaire sur une page visualisée par l'utilisateur prenant en compte des caractéristiques déterminées du terminal 2 de l'utilisateur. En particulier, la technique tient compte de la capacité dudit terminal 2 à supporter ou non des appels téléphoniques pour adapter la bannière publicitaire affichée. Certaines bannières comprennent des informations relatives au numéro d'un annonceur. Ainsi, lorsqu'une telle publicité est sélectionnée (par exemple, par un clic de bouton), un numéro de téléphone associé à la publicité de l'annonceur est composé automatiquement par le terminal de l'utilisateur. Toutefois, le numéro composé étant un numéro sortant pour l'utilisateur, ce dernier va supporter le coût de l'appel, ce qui va le dissuader de solliciter une mise en relation avec le centre d'appel. En outre, certains modèles de téléphone n'autorisent pas l'émission d'un appel sortant sans obtenir un accord préalable de l'utilisateur, ce qui réduit grandement le taux de transformation. Cette alternative consiste à utiliser des mots-clés intégrés dans la page web pour réaliser cette fois ci non pas un call back mais un appel sortant. Ces mots clés caractérisent le numéro de téléphone du standard téléphonique et décrivent une action à mettre en oeuvre si l'utilisateur clique sur une zone précise la page, à savoir lancer un appel. Cette technique présente une meilleure efficacité, mais à l'inconvénient majeur de faire assumer à l'utilisateur le coût de l'appel. De plus le standard téléphonique ne dispose au préalable d'aucune information sur l'utilisateur qui l'appelle. La régie publicitaire n'est pas non plus capable de réaliser une sélection préalable des utilisateurs à qui afficher une publicité plutôt qu'une autre en fonction des caractéristiques de l'utilisateur.

Le document US 209/016507décrit une technique de mise en relation entre un terminal d'un utilisateur et un centre d'appels d'un annonceur à partir d'une bannière publicitaire.

### OBJET DE L'INVENTION

L'invention a pour but de remédier aux inconvénients des procédés existants de « call back ».

A cet effet, l'invention met en oeuvre une authentification de l'utilisateur d'un réseau de type ADSL ou mobile par le biais d'une association entre l'adresse IP du terminal et le numéro de la ligne ou à la carte SIM du terminal portable ayant établi la connexion à Internet. En mettant en oeuvre un service dédié permettant de déclencher un appel, l'invention permet d'identifier l'utilisateur auprès de la régie publicitaire et de rediriger l'utilisateur vers son opérateur. Après avoir vérifié l'appartenance au réseau de l'utilisateur et identifier un numéro de téléphone joignable, l'opérateur peut alors lancer un premier appel vers le standard téléphonique du commerçant et un deuxième appel vers l'utilisateur pour abouter ensuite les deux connexions entre elles.

L'invention présente, dans au moins une de ses mises en oeuvre, les avantages suivants:
- obtenir un taux de transformation de 100% après sélection d'une bannière de publicité,
- éviter les phases de saisie d'informations complexes pour l'utilisateur,
- permettre à l'opérateur d'interdire toutes mauvaises saisies intentionnelles,
- offrir le cas échéant une gratuité de l'appel de l'utilisateur, et
- conférer à l'opérateur un rôle central dans la mise en correspondance entre l'utilisateur et le centre d'appel.
- fournir au commerçant des informations concernant l'utilisateur par voie informatique en parallèle du lancement de l'appel (exemple, nom prénom civilité, date de naissance, adresse...).

L'invention concerne donc un procédé de mise en relation entre un terminal d'un utilisateur et un centre d'appels d'un annonceur à partir d'une bannière publicitaire issue d'un serveur de régie publicitaire, le terminal étant en relation avec le réseau Internet via un réseau d'un opérateur de télécommunications,
**caractérisé en ce qu'il** comporte les étapes suivantes :
- vérifier que le terminal appartient au réseau de l'opérateur et si la vérification est positive,
- afficher une bannière publicitaire sur un écran du terminal, cette bannière publicitaire comportant un code d'annonceur et une adresse d'un serveur de gestion d'appels appartenant au réseau de l'opérateur, et
- lorsque l'utilisateur sélectionne ladite bannière publicitaire, établir une communication entre le terminal et le serveur de gestion d'appels, puis
- identifier l'adresse privée attribuée au terminal sur le réseau de l'opérateur,
- identifier un numéro d'appel du terminal en établissant une correspondance entre ladite adresse privée et le numéro d'appel de ce terminal,
- identifier un numéro d'appel du centre d'appels en établissant une correspondance entre le code annonceur de la bannière publicitaire sélectionnée et le numéro d'appel du centre d'appels,
- déclencher un premier appel vers l'utilisateur suivant le numéro d'appel du terminal préalablement déterminé,
- déclencher un deuxième appel vers le centre d'appels suivant le numéro d'appel du centre d'appels de l'annonceur préalablement déterminé,
- effectuer l'aboutement des deux appels pour mettre en relation le terminal de l'utilisateur et le centre d'appels de l'annonceur.

Selon une mise en oeuvre, le procédé comporte l'étape de tenir compte des capacités d'appel du centre d'appels pour déclencher le premier et le deuxième appel.

Selon une mise en oeuvre, une pluralité de terminaux étant connectés au réseau de l'opérateur, il comporte l'étape de sélectionner les terminaux sur lesquels la bannière publicitaire est affichée en fonction du forfait souscrit par l'utilisateur auprès de l'opérateur.

Selon une mise en oeuvre, le procédé comporte l'étape de fournir des informations relatives à l'utilisateur consistant en une fiche détaillée sur la civilité de l'utilisateur, et/ou des informations relatives aux préférences de l'utilisateur déterminées notamment à partir des contenus ou droits média téléchargés par ce dernier.

Selon une mise en oeuvre, le procédé comporte l'étape de déterminer la position du terminal de l'utilisateur, et dans le cas où l'utilisateur se trouve hors de France, il comporte l'étape de demander à l'utilisateur l'autorisation d'accepter le premier appel déclenché à destination de son terminal.

L'invention tient également compte de la capacité du centre d'appels. Ainsi, en vérifiant le nombre d'appels redirigés précédemment vers un standard connu, et en connaissant le nombre d'opérateurs y répondant, il devient possible de ne pas afficher une bannière publicitaire ou d'afficher une bannière classique si on sait qu'il n'y a pas d'opérateurs disponibles pour répondre aux clients.

L'invention concerne en outre un système de communication en tant que tel pour la mise en relation entre un terminal d'un utilisateur et un centre d'appels d'un annonceur à partir d'une bannière publicitaire issue d'un serveur d'une régie publicitaire, le terminal étant en relation avec le réseau Internet via un réseau d'un opérateur de télécommunications, mettant en oeuvre le procédé selon l'invention, **caractérisé en ce qu'il** comporte un serveur de gestion d'appels implanté sur le réseau de l'opérateur stockant une table établissant une correspondance entre des codes annonceurs associés à des bannières publicitaires et des numéros d'appel de centres d'appels correspondant à ces codes annonceurs.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 (déjà décrite): une représentation schématique d'un système de communication mettant en oeuvre un procédé de rappel d'un utilisateur selon l'état de la technique;
Figure 2: une représentation schématique d'un système de communication mettant en oeuvre le procédé de rappel automatique d'un utilisateur selon l'invention;

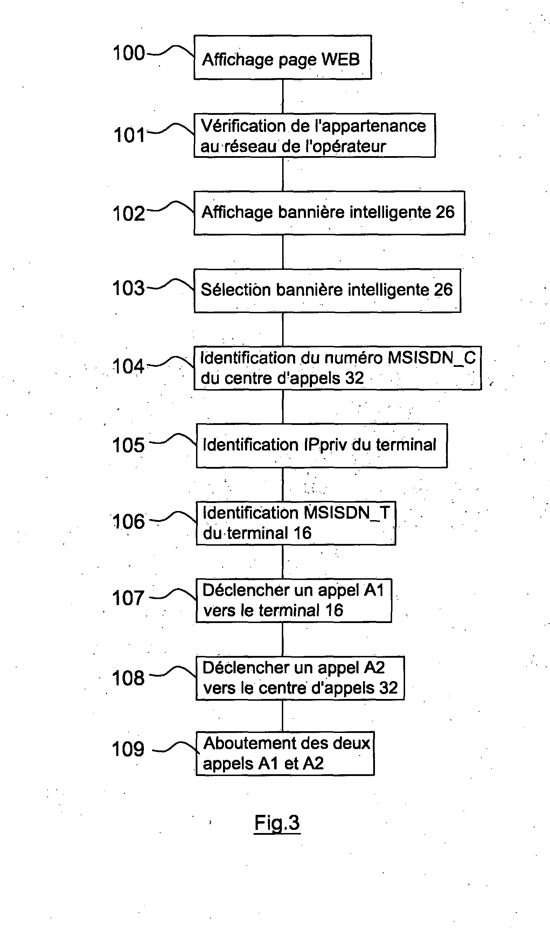

Figure 3: une représentation des étapes du procédé de rappel automatique d'un utilisateur selon l'état de la technique.

### DESCRIPTION D'EXEMPLES DE REALISATION DE L'INVENTION

La Figure 2 montre un réseau 15 d'un opérateur avec lequel un terminal 16 d'un utilisateur est en relation pour pouvoir accéder au réseau Internet 19. Typiquement, le réseau 15 de l'opérateur est un réseau de téléphonie mobile de type GSM ou UMTS (ou tout autre réseau de télécommunication) tandis que le terminal 16 de l'utilisateur est un terminal de type SMARTPHONE. Alternativement, le réseau 15 est un réseau de téléphonie fixe; tandis que le terminal 16 est un ordinateur accédant à Internet via un modem appelé couramment "box" mettant en oeuvre le protocole ADSL. Suite à une requête de l'utilisateur effectuée sur un navigateur, un serveur 22 de contenu connecté au réseau Internet 19 est susceptible d'afficher une page WEB 23 sur l'écran du terminal 16 de l'utilisateur. Le serveur de contenu 22 appartient par exemple à une entreprise média diffusant des informations d'actualité ou sportives.

Par ailleurs, un serveur 25 de régie publicitaire connecté au réseau Internet 19 est susceptible d'afficher une bannière publicitaire 26 d'un annonceur sur la page WEB 23 visualisée par l'utilisateur. A cet effet, l'entreprise média qui gère le contenu délivré par le serveur 22 met à disposition une zone d'affichage 27 pour obtenir une rémunération à partir de la bannière publicitaire 26 affichée. La bannière publicitaire 26 est soit une bannière publicitaire classique comportant un lien vers un autre serveur du réseau Internet délivrant un contenu renseignant sur le produit objet de la publicité, soit une bannière dite "intelligente" si la régie détecte que le terminal 16 appartient au réseau de l'opérateur avec lequel la régie a établi une coopération. Cette bannière intelligente 26 comprend une adresse @AdServ d'un serveur 30 de gestion d'appels, dit "Ad serveur" situé sur le réseau 15 de l'opérateur ainsi qu'un code annonceur référencé CA. Pour distinguer les terminaux appartenant au réseau 15 de l'opérateur des autres terminaux n'appartenant pas au réseau 15, le serveur 25 stocke une table 28 contenant la liste d'au moins une partie des adresses des proxys 18.1-18.M du réseau 15 de l'opérateur.

Ce serveur 25 de régie publicitaire est en relation directe avec l'Ad serveur 30 permettant la mise en relation entre l'utilisateur et un centre d'appels 32 de l'annonceur. A cet effet, l'Ad serveur 30 stocke notamment une table 31 établissant les correspondances entre les codes annonceurs CA contenus dans les bannières publicitaires 26 et les numéros des centres d'appels 32 (MSISDN_C) associés aux différents annonceurs. Ces correspondances entre les codes annonceurs CA et les numéros des centres d'appels 32 sont fournies et mises à jour régulièrement par la régie publicitaire.

De manière connue, le réseau 15 de l'opérateur comporte un serveur 34, pouvant être un serveur Radius, permettant de centraliser des données d'authentification des différents terminaux connectés aux proxys 18.1-18.M du réseau 15. Ce serveur 34 contient une table 35 de correspondance entre les adresses privées IPpriv attribuées par l'opérateur aux terminaux sur le réseau privé 15 de l'opérateur et les numéros d'appel MSISDN_T de ces terminaux. L'Ad serveur 30 est autorisé à accéder directement au serveur 34 pour déterminer le numéro d'appel MSISDN_T correspondant au terminal 16 renvoyé sur l'Adserveur 30 lors de la sélection de la bannière intelligente 26.

On décrit ci-après une mise en oeuvre détaillée du procédé selon l'invention.

Dans une étape 100, le terminal 16 affiche une page Internet 23 téléchargée à partir du serveur de contenus 22. Dans une étape 101, le serveur 25 de régie publicitaire en interaction avec le serveur de contenus 22 détermine, à partir de la table 28, si le terminal 16 se connecte au réseau Internet à partir d'un proxy de l'opérateur. Le serveur 25 de régie affiche alors une bannière classique contenant un lien Internet dans le cas où le terminal 16 n'appartient pas au réseau de l'opérateur (le proxy 18.1 ne correspond pas aux proxys de la liste 28). Dans le cas où le terminal 16 appartient au réseau 15 de l'opérateur (le proxy 18.1 correspond aux proxys de la liste 28), le serveur 25 affiche dans une étape 102 la bannière intelligente 26 comprenant le lien (@adserv) vers l'Ad serveur 30 situé sur le réseau 15 de l'opérateur ainsi que code annonceur CA associé à la bannière affichée 26. Le choix de la bannière intelligente 26 affichée est effectuée par la régie notamment en fonction des annonceurs ayant souscrit à ce type de publicité et le cas échéant en fonction d'un profil de l'utilisateur comme indiqué plus en détails ci-après.

Lorsque l'utilisateur sélectionne dans une étape 103 la bannière intelligente 26 affichée sur l'écran de son terminal 16, le terminal 16 est renvoyé vers l'Adserveur 30. La sélection de la bannière publicitaire 26 peut être effectuée via un clic bouton ou une sélection tactile de la bannière publicité, ou tout autre moyen adapté.

L'Adserveur 30 identifie alors dans une étape 104 l'annonceur, plus précisément le numéro MSISDN_C du centre d'appels 32 associé à cet annonceur, à partir du code annonceur CA retourné par la bannière 26 et de la table 31 de correspondance entre le code annonceur CA et le numéro d'appel (MSISDN_C) du centre d'appels 32. L'affichage de la bannière est alors modifié pour prévenir l'utilisateur qu'un appel va être mis en oeuvre. Afin d'éviter les opérations inutiles cet écran peut être utilisé pour faire confirmer à l'utilisateur qu'il souhaite être appelé.

Dans une étape 105, l'Ad serveur 30 identifie ensuite l'adresse IP privée IPpriv attribuée au terminal 16 par l'opérateur sur le réseau 15. Dans une étape 106, l'Adserveur 30 se connecte au serveur Radius 34 pour identifier le numéro d'appel (MSISDN_T) du terminal 16 en établissant, à partir de la table 35, la correspondance entre le numéro d'appel MSISDN_T de l'utilisateur et l'adresse IP privée attribuée par l'opérateur.

Dans une étape 107, l'Ad serveur 30 déclenche un premier appel A1 vers le terminal 16 suivant le numéro d'appel MSISDN_T de l'utilisateur préalablement identifié. Dans une étape 108, l'Ad serveur 30 déclenche également un deuxième appel A2 vers le centre d'appels 32 suivant le numéro d'appel MSISDN_C préalablement identifié. Dans une étape 109, le premier A1 et le deuxième A2 appels sont ensuite aboutés entre eux pour mettre en relation le terminal 16 de l'utilisateur et le centre d'appels 32 associé à la bannière 26.

L'utilisateur ayant manifesté son intérêt à l'égard d'un produit via la sélection de la bannière publicitaire 26 correspondante peut ainsi être mis en relation avec le centre d'appels 32 adapté pour obtenir des renseignements supplémentaires très rapidement, quelques secondes seulement après avoir sélectionné la bannière publicitaire 26, de manière complètement transparente pour lui.

En outre, on note que les deux appels émis A1, A2 sont des appels entrants par rapport aux deux éléments en communication (d'un côté le terminal 16 de l'utilisateur et de l'autre le centre d'appels 32). Il sera ainsi possible de décider de facturer l'ensemble des communications soit au commerçant, soit à la régie publicitaire, soit à l'utilisateur selon les modalités du contrat établi. Toutefois par défaut, alors même qu'il se trouve à l'initiative de l'appel, l'utilisateur ayant souscrit un abonnement sur un territoire où les appels entrants ne sont pas facturés (tel que la France), ne supportera pas les coûts d'un tel appel.

L'Ad serveur 30 ayant accès au serveur HLR (Home location Register) qui contient les informations relatives à l'abonnement de l'utilisateur et à sa position générale, l'Ad serveur 30 pourra déterminer le pays dans lequel se trouve l'utilisateur. Dans le cas où l'utilisateur se trouverait hors du territoire français, ce qui implique que les appels entrants deviendraient payants, on prévoit de demander à l'utilisateur s'il accepte ou non l'appel déclenché par l'Ad serveur 30. Sur ce même principe, il est possible de procéder à un routage d'appels vers le centre d'appels le plus proche de l'utilisateur, comme ce peut etre le cas pour un annonceur comprenant un réseau de boutiques locales.

L'annonceur peut demander éventuellement de sélectionner les terminaux 16 sur lesquels la bannière intelligente 26 est affichée en fonction du forfait souscrit auprès de l'opérateur. Ainsi, pour un type de produit de luxe, l'annonceur pourra souhaiter sélectionner des utilisateurs disposant d'un forfait haut de gamme. De cette manière, l'annonceur cible le type d'utilisateur et donc la clientèle potentielle pour laquelle on autorise la mise en communication du terminal 16 avec le centre d'appels 32.

Suivant une mise en oeuvre, l'Ad serveur 30 peut également transmettre à la régie publicitaire ou directement au centre d'appels 32 des informations relatives à l'utilisateur cherchant à se mettre en relation avec le centre d'appels 32. Ces informations pourront consister en une fiche détaillée sur la civilité de l'utilisateur, et/ou des informations relatives aux préférences de l'utilisateur déterminées notamment à partir des contenus ou droits média téléchargés par ce dernier. Ces informations pourront être obtenues par l'Ad serveur 30 à partir du module HLR et du système d'informations de l'opérateur, et le cas échéant de serveurs de filtrage (non représentés) contenant des profils de filtrage des données de l'utilisateur exprimant les préférences de l'utilisateur. Cette étape est mise en oeuvre de manière optionnelle selon les modalités juridiques existantes entre l'utilisateur et l'opérateur.

Dans une mise en oeuvre, l'Ad serveur 30 tient compte des capacités d'appel du centre d'appels 32 avant de déclencher les appels vers le terminal 16 et le centre d'appels 32. Ainsi, dans le cas où l'ensemble des lignes du centre d'appels 32 sont occupées au moment de la sélection par l'utilisateur de la bannière 26, l'Ad serveur 30 retarde le déclenchement des appels jusqu'à ce qu'une ligne soit rendue disponible. La capacité du centre d'appels 32 est renseignée par la régie publicitaire en relation avec l'annonceur. En variante, en vérifiant le nombre d'appels redirigés précédemment vers un standard connu, et en connaissant le nombre d'opérateurs y répondant, il devient possible de ne pas afficher une bannière publicitaire ou d'afficher une bannière classique si on sait qu'il n'y a pas d'opérateurs disponibles pour répondre aux clients.

On note que la régie publicitaire 26 peut être accessible également depuis le réseau publique 19. La régie 26 peut être interconnectée avec au moins un deuxième réseau privé (d'un autre opérateur) référencé 15' sur la Figure 2. Dans ce cas, on met en oeuvre un guichet « aiguillage opérateur » 40 ayant pour fonction de rediriger le terminal 16 de l'utilisateur vers le réseau privé adapté 15 ou 15' en fonction de son opérateur.

Bien entendu, l'homme du métier pourra implémenter des variantes de mises en oeuvre équivalentes à celles décrites dans le présent document sans sortir du cadre de l'invention. Ainsi, par exemple, l'ad serveur 30 peut également gérer l'affichage des bannières publicitaires 26 sur l'écran du terminal 16 en lieu et place du serveur de régie publicitaire.

## Revendications

1. Procédé de mise en relation entre un terminal (16) d'un utilisateur et un centre d'appels (32) d'un annonceur à partir d'une bannière publicitaire issue d'un serveur (25) de régie publicitaire, le terminal (16) étant en relation avec le réseau Internet (19) via un réseau (15) d'un opérateur de télécommunications,
comportant les étapes suivantes :
- vérifier que le terminal (16) appartient au réseau (15) de l'opérateur et si la vérification est positive,
- afficher une bannière publicitaire (26) sur un écran du terminal (16), cette bannière publicitaire (26) comportant un code d'annonceur (CA) et une adresse (@Adserv) d'un serveur (30) de gestion d'appels appartenant au réseau (15) de l'opérateur, et
- lorsque l'utilisateur sélectionne ladite bannière publicitaire (26), établir une communication entre le terminal (16) et le serveur (30) de gestion d'appels, puis
- identifier l'adresse privée (IPpriv) attribuée au terminal (16) sur le réseau (15) de l'opérateur,
- identifier un numéro d'appel (MSISDN_T) du terminal (16) en établissant une correspondance entre ladite adresse privée (IPpriv) et le numéro d'appel (MSISDN_T) de ce terminal (16),
- identifier un numéro d'appel (MSISDN_C) du centre d'appels (32) en établissant une correspondance entre le code annonceur (CA) de la bannière publicitaire (26) sélectionnée et le numéro d'appel (MSISDN_C) du centre d'appels (32),
- déclencher un premier appel (A1) vers l'utilisateur suivant le numéro d'appel (MSISDN_T) du terminal (16) préalablement identifié,
- déclencher un deuxième appel (A2) vers le centre d'appels (32) suivant le numéro d'appel (MSISDN_C) du centre d'appels (32) de l'annonceur préalablement identifié,
- effectuer l'aboutement des deux appels (A1, A2) pour mettre en relation le terminal (16) de l'utilisateur et le centre d'appels (32) de l'annonceur.

2. Procédé selon la revendication 1, **caractérisé en ce qu'il** comporte l'étape de tenir compte des capacités d'appel du centre d'appels (32) pour déclencher le premier (A1) et le deuxième appel (A2).

3. Procédé selon la revendication 1 ou 2, **caractérisé en ce que** une pluralité de terminaux étant connectés au réseau (15) de l'opérateur, il comporte l'étape de sélectionner les terminaux sur lesquels la bannière publicitaire (26) est affichée en fonction du forfait souscrit par l'utilisateur auprès de l'opérateur.

4. Procédé selon l'une des revendications 1 à 3, **caractérisé en ce qu'il** comporte l'étape de fournir des informations relatives à l'utilisateur consistant en une fiche détaillée sur la civilité de l'utilisateur, et/ou des informations relatives aux préférences de l'utilisateur déterminées notamment à partir des contenus ou droits média téléchargés par ce dernier.

5. Procédé selon l'une des revendications 1 à 4, **caractérisé en ce qu'il** comporte l'étape de déterminer la position du terminal (16) de l'utilisateur, et dans le cas où l'utilisateur se trouve hors de France, il comporte l'étape de demander à l'utilisateur l'autorisation d'accepter le premier appel déclenché à destination de son terminal.

6. Système de communication pour la mise en relation entre un terminal (16) d'un utilisateur et un centre d'appels (32) d'un annonceur à partir d'une bannière publicitaire issue d'un serveur (25) d'une régie publicitaire, le terminal (16) étant en relation avec le réseau Internet (19) via un réseau (15) d'un opérateur de télécommunications, mettant en oeuvre le procédé selon l'une des revendications 1 à 5, comportant un serveur de gestion d'appels (30) implanté sur le réseau de l'opérateur stockant une table (31) établissant une correspondance entre des codes annonceurs (CA) associés à des bannières publicitaires (26) et des numéros d'appel (MSISDN_C) de centres d'appels (32) correspondant à ces codes annonceurs (CA).

## Patentansprüche

1. Verfahren zur Verbindung zwischen einem Terminal (16) eines Benutzers und einer Rufzentrale (32) eines Anzeigenkunden auf Basis eines Werbebanners, das von einem Werbevermarktungsserver (25) ausgeht, wobei das Terminal (16) mit dem Internet (19) über ein Netzwerk (15) eines Telekommunikationsbetreibers verbunden ist,
umfassend die folgenden Schritte:
- Überprüfen, ob das Terminal (16) dem Netzwerk (15) des Betreibers angehört, und, wenn die Überprüfung positiv ist,
- Anzeigen eines Werbebanners (26) auf einem Bildschirm des Terminals (16), wobei dieses Werbebanner (26) einen Code des Anzeigenkunden (CA) und eine Adresse (@Adserv) eines Anrufverwaltungsservers (30), der dem Netzwerk (15) des Betreibers angehört, umfasst, und
- wenn der Benutzer das Werbebanner (26) auswählt, Herstellen einer Kommunikation zwischen dem Terminal (16) und dem Anrufverwaltungsserver (30), dann
- Identifizieren der Privatadresse (IPpriv), die dem Terminal (16) in dem Netzwerk (15) des Betreibers zugeordnet ist,
- Identifizieren einer Rufnummer (MSISDN_T) des Terminals (16), wobei eine Korrespondenz zwischen der Privatadresse (IPpriv) und der Rufnummer (MSISDN_T) dieses Terminals (16) hergestellt wird,
- Identifizieren einer Rufnummer (MSISDN_C) der Rufzentrale (32), wobei eine Korrespondenz zwischen dem Code des Anzeigenkunden (CA) des ausgewählten Werbebanners (26) und der Rufnummer (MSISDN_C) der Rufzentrale (32) hergestellt wird,
- Auslösen eines ersten Anrufs (A1) an den Benutzer gemäß der Rufnummer (MSISDN_T) des Terminals (16), die vorher identifiziert wurde,
- Auslösen eines zweiten Anrufs (A2) an die Rufzentrale (32) gemäß der Rufnummer (MSISDN_C) der Rufzentrale (32) des Anzeigenkunden, die vorher identifiziert wurde,
- Stoß-an-Stoß-Verbinden der beiden Anrufe (A1, A2), um das Terminal (16) des Benutzers und die Rufzentrale (32) des Anzeigenkunden zu verbinden.

2. Verfahren nach Anspruch 1, **dadurch gekennzeichnet, dass** es den Schritt der Berücksichtigung der Rufkapazitäten der Rufzentrale (32) umfasst, um den ersten (A1) und den zweiten Anruf (A2) auszulösen.

3. Verfahren nach Anspruch 1 oder 2, **dadurch gekennzeichnet, dass**, wobei eine Vielzahl von Terminals an das Netzwerk (15) des Betreibers angeschlossen sind, es den Schritt des Auswählens der Terminals umfasst, auf denen das Werbebanner (26) in Abhängigkeit von der vom Benutzer beim Betreiber unterzeichneten Pauschale angezeigt wird.

4. Verfahren nach einem der Ansprüche 1 bis 3, **dadurch gekennzeichnet, dass** es den Schritt der Lieferung von Informationen über den Benutzer umfasst, bestehend in einer detaillierten Datei über den Zivilstatus des Benutzers, und/oder von Informationen zu den Vorlieben des Benutzers, die insbesondere auf Basis der von diesem Letztgenannten ferngeladenen Inhalte und Medienrechten bestimmt werden.

5. Verfahren nach einem der Ansprüche 1 bis 4, **dadurch gekennzeichnet, dass** es den Schritt des Bestimmens der Position des Terminals (16) des Benutzers umfasst, und, falls sich der Benutzer außerhalb von Frankreich befindet, den Schritt des Forderns der Genehmigung vom Benutzer, den ersten Anruf, der in Richtung seines Terminals ausgelöst wurde, anzunehmen.

6. Kommunikationssystem für die Verbindung zwischen einem Terminal (16) eines Benutzers und einer Rufzentrale (32) eines Anzeigenkunden auf Basis eines Werbebanners, das von einem Werbevermarktungsserver (25) ausgeht, wobei das Terminal (16) mit dem Internet (19) über ein Netzwerk (15) eines Telekommunikationsbetreibers verbunden ist, das das Verfahren nach einem der Ansprüche 1 bis 5 einsetzt, umfassend einen Rufverwaltungsserver (30), der in dem Netzwerk des Betreibers angeordnet ist und eine Tabelle (31) speichert, die eine Korrespondenz zwischen Codes von Anzeigenkunden (CA), die Werbebannern (26) zugeordnet sind, und Rufnummern (MSISDN_C) von Rufzentralen (32), die diesen Codes von Anzeigenkunden (CA) entsprechen, herstellen.

## Claims

1. Method for connecting a terminal (16) of a user and a call centre (32) of an advertiser from an advertising banner from an advertising agency server (25), the terminal (16) being connected to the Internet network (19) via a network (15) of a telecommunications operator,
having the following steps:
- checking that the terminal (16) belongs to a network (15) of the operator and, if the check is positive,
- displaying an advertising banner (26) on a screen of the terminal (16), said advertising banner (26) having an advertiser code (CA) and an address (@Adserv) for a call management server (30) belonging to the network (15) of the operator, and
- when the user selects said advertising banner (26), setting up a communication between the terminal (16) and the call management server (30), and then
- identifying the private address (IPpriv) assigned to the terminal (16) on the network (15) of the operator,
- identifying a telephone number (MSISDN_T) for the terminal (16) by establishing a correspondence between said private address (IPpriv) and the telephone number (MSISDN_T) of said terminal (16),
- identifying a telephone number (MSISDN_C) for the call centre (32) by establishing a correspondence between the advertiser code (CA) of the selected advertising banner (26) and the telephone number (MSISDN_C) of the call centre (32),
- initiating a first call (A1) to the user using the telephone number (MSISDN_T) of the previously identified terminal (16),
- initiating a second call (A2) to the call centre (32) using the telephone number (MSISDN_C) of the call centre (32) of the previously identified advertiser,
- linking the two calls (A1, A2) in order to connect the terminal (16) of the user and the call centre (32) of the advertiser.

2. Method according to Claim 1, **characterized in that** it has the step of taking account of the call capabilities of the call centre (32) in order to initiate the first (A1) and the second (A2) call.

3. Method according to Claim 1 or 2, **characterized in that** a plurality of terminals being connected to the network (15) of the operator, it has the step of selecting the terminals on which the advertising banner (26) is displayed on the basis of the contract taken out by the user with the operator.

4. Method according to one of Claims 1 to 3, **characterized in that** it has the step of providing information relating to the user consisting of a detailed record about the civility of the user and/or information relating to the preferences of the user that are determined notably from the content or media rights downloaded by said user.

5. Method according to one of Claims 1 to 4, **characterized in that** it has the step of determining the position of the terminal (16) of the user, and, if the user is outside France, it has the step of asking the user for authorization to accept the first call initiated to his terminal.

6. Communication system for connecting a terminal (16) of a user and a call centre (32) of an advertiser from an advertising banner from a server (25) of an advertising agency, the terminal (16) being connected to the Internet network (19) via a network (15) of a telecommunications operator, implementing the method according to one of Claims 1 to 5, having a call management server (30) that is set up on the network of the operator storing a table (31) establishing a correspondence between advertiser codes (CA) associated with advertising banners (26) and telephone numbers (MSISDN_C) of call centres (32) corresponding to said advertiser codes (CA).
